# EUROPÄISCHE PATENTSCHRIFT

(11) **EP 2 734 408 B1**
(45) Veröffentlichungstag und Bekanntmachung des Hinweises auf die Patenterteilung: **06.09.2017**
(21) Anmeldenummer: 12733686.5
(22) Anmeldetag: 05.07.2012
(51) Int. Cl.: B60N 2/225, F16H 1/28

(54) **BESCHLAG FÜR EINE VERSTELLVORRICHTUNG EINES KRAFTFAHRZEUGSITZES**
FITTING FOR AN ADJUSTING DEVICE OF AN AUTOMOTIVE VEHICLE
FERRURE POUR DISPOSITIF DE RÉGLAGE D'UN VÉHICULE AUTOMOBILE

(30) Priorität: 21.07.2011 DE 102011052044
(43) Veröffentlichungstag der Anmeldung: 28.05.2014
(73) Patentinhaber: Adient Luxembourg Holding S.à r.l., 2453 Luxembourg (LU)
(72) Erfinder: HOFFMANN, Andreas, 42489 Wülfrath (DE)
(74) Vertreter: Loock, Jan Pieter
(86) Internationale Anmeldenummer: PCT/EP2012/063151
(87) Internationale Veröffentlichungsnummer: WO 2013/010808

(56) Entgegenhaltungen:
- WO-A1-02/064397
- DE-A1-102008 039 942
- DE-B3-102005 015 831

## Beschreibung

Die Erfindung betrifft einen Beschlag für eine Verstellvorrichtung, insbesondere Neigungsverstellung eines Kraftfahrzeugsitzes, mit
- einem eine erste Innenverzahnung aufweisenden Beschlagoberteil,
- einem relativ zum Beschlagoberteil um eine Beschlagachse verstellbaren Beschlagunterteil mit einer koaxial zur ersten Innenverzahnung angeordneten zweiten Innenverzahnung,
- mindestens zwei, vorzugsweise drei drehbar angeordnete Planetenräder, die mit der ersten und zweiten Innenverzahnung in Eingriff befindlich sind und
- einer Antriebswelle, die mit einem Ritzel mit den mindestens zwei Planetenrädern in Wirkverbindung befindlich ist und
- mindestens zwei, vorzugsweise drei, die Planetenräder in Rotationsachsenrichtung auf das Beschlagunterteil oder Beschlagoberteil vorspannende Federelemente, welche verteilt an einer die Planetenräder lagernden Lagerscheibe ausgebildet sind.
Beschläge der eingangs genannten Art werden im Kraftfahrzeugbereich insbesondere für Verstellvorrichtungen eines Kraftfahrzeugsitzes genutzt, bspw. um eine Sitzlehne gegenüber einer Sitzfläche oder eine Neigung oder eine Höhe des Kraftfahrzeugsitzes einzustellen, wobei die durch die Verschwenkung des Beschlagoberteils relativ gegenüber dem Beschlagunterteil erfolgende Bewegung zur Verlagerung der an den Beschlagteilen anordbaren Bauteile der Kraftfahrzeugsitze genutzt wird, so wie z.B. aus der DE 10 2005 015 831 B3 bekannt.

Weitere Verstellvorrichtungen mit Planetenrädern sind z.B. aus WO 02/064397 A1 und DE 10 2008 039 942 A1 bekannt. Um eine Verlagerung des Beschlagoberteils gegenüber dem Beschlagunterteil zu erreichen, weisen die erste und zweite Innenverzahnung eine unterschiedliche Zähnezahl, gleichzeitig jedoch konzentrische Kopf- sowie Fußkreise auf. Ein Antrieb der Planetenräder über ein Ritzel, welches sowohl unmittelbar mit den Planetenrädern in Eingriff bringbar ist oder aber auch zum Antrieb eines mit den Planetenrädern in Kontakt stehenden Sonnenrades dient, bewirkt eine Verdrehung des Beschlagoberteils relativ gegenüber dem Beschlagunterteil, wobei der Beschlagaufbau eine sehr genaue Einstellmöglichkeit bei einer Selbsthemmung der eingestellten Position bietet.

Um auch bei ungünstigen Toleranzlagen eine Funktion des Beschlages sicherzustellen, muss in der Regel konstruktiv ein Mindestspiel vorgesehen werden. Dieses Mindestspiel kann bei besonderen Systembelastungen, bspw. bei Nulldurchgängen bzw. Lastrichtungswechseln, insbesondere nach höheren Betriebsdauern zu einer Geräuschbelastung sowie Ruckeleffekten oder Slip-Stick-Effekten führen, wobei sich diese insbesondere mit zunehmender Betriebszeit aufgrund des sich einstellenden Verschleißes verstärken.

Der Erfindung liegt die Aufgabe zugrunde, einen Beschlag der eingangs genannten Art bereitzustellen, bei welchem auch nach längerer Betriebszeit Geräuschbelastungen sowie Ruckeleffekte vermieden werden.

Die Erfindung löst die Aufgabe durch einen Beschlag mit den Merkmalen des Anspruchs 1. Vorteilhafte Weiterbildungen der Erfindung sind in den abhängigen Ansprüchen angegeben.

Kennzeichnend für den erfindungsgemäßen Beschlag sind die Federelemente durch über eine Ausnehmung partiell von der Lagerscheibe abgetrennte Bereiche gebildet, die von einer Ebene der Lagerscheibe vorstehende Erhebungen aufweisen. Das Federelement ist dabei derart innerhalb des Beschlages angeordnet, dass es, in Abhängigkeit von dessen Anordnung, eine Vorspannkraft auf die Planetenräder ausübt, durch welche diese an das dem Federelement gegenüberliegende Beschlagteil angedrückt werden.

Durch die Verwendung eines Federelements wird eine zuverlässige Lagesicherung der Planetenräder in axialer Richtung erreicht, wodurch das spürbare Spiel deutlich reduziert, bzw. vermieden wird. Gleichzeitig gewährleistet die Vorspannung im Falle eines aufgrund der Systembelastungen erfolgten Verschleißes eine Nachführung der Planetenräder, so dass der Beschlag insgesamt eine hohe Zuverlässigkeit aufweist und es darüber hinaus auch nach längeren Betriebszeiten, d. h. des Einsatzes über mehrere Jahre trotz eines Verschleißes nicht zu einem Ruckeln oder Geräuschbelastungen kommt. Eventuell auftretender Verschleiß wird durch das Federelement ausgeglichen, nachdem aufgrund der Federvorspannung das Federelement eine Nachführung bewirkt, so dass auch nach einem Verschleiß ein nahezu spielfreier Betrieb gewährleistet wird.

Gemäß der Erfindung dient zur Anordnung der Planetenräder zueinander eine Lagerscheibe. Damit werden Relativbewegungen der Planetenräder gegenüber den an diesen anliegenden Federelementen vermieden werden, nachdem die Verwendung einer Lagerscheibe die relativ gegenüber der Lagerscheibe ortsfeste Anordnung der Federelemente ermöglicht. An der Lagerscheibe sind mindestens zwei, vorzugsweise drei Federelemente verteilt an der Lagerscheibe ausgebildet. Eine entsprechende Ausgestaltung der Erfindung, wobei die Federelemente idealerweise auf einer sich um die Beschlagachse erstreckenden Kreisbahn im gleichen Abstand voneinander angeordnet sind, gewährleistet eine besonders gute und gleichmäßige Federvorspannung der Planetenräder in Richtung auf das Beschlagober- oder Beschlagunterteil. Die Anordnung der Federelemente erfolgt dabei symmetrisch zu den Planetenrädern, so dass einem Verkanten oder einer sich möglicherweise ergebenden ungleichmäßigen Vorspannung der einzelnen Planetenräder besonders wirksam vorgebeugt wird.

Ergänzend zur Verschleißminimierung sowie Geräuschreduzierung kann nach einer Weiterbildung der Erfindung vorgesehen sein, dass die Lagerscheibe zumindest im Kontaktbereich mit den Planetenrädern eine Begleitbeschichtung aufweist. Nach der Erfindung ist vorgesehen, dass die Federelemente durch über eine Ausnehmung partiell von der Lagerscheibe abgetrennte Bereiche gebildet sind, die ferner von einer Ebene der Lagerscheibe vorstehende Erhebungen aufweisen. Gemäß dieser Ausgestaltung der Erfindung sind die Federelemente vorzugsweise durch Laschen gebildet, die über Ausnehmungen derart von der Lagerscheibe abgetrennt sind, dass diese nur über einen Steg elastisch mit der Lagerscheibe verbunden sind. Um in der Einbaulage der Lagerscheibe eine federnde Wirkung der Laschen zu erreichen, weisen diese von einer erhebungsfreien Ebene der Lagerscheibe vorstehende Erhebungen auf, wodurch sich in der Einbaulage eine elastische Verlagerung der Laschen gegenüber der Lagerscheibe ergibt, welche zur Erzielung der Federvorspannung dient. Diese Ausgestaltung der Lagerscheibe lässt sich besonders einfach und kostengünstig herstellen und weist überdies eine hohe Zuverlässigkeit auf.

Der erfindungsgemäße Beschlag kann grundsätzlich an beliebiger Stelle am Kraftfahrzeugsitz genutzt werden. Besonders vorteilhafterweise wird der Beschlag jedoch zur Neigungsverstellung eines Kraftfahrzeugsitzes eingesetzt, wobei dieser in der Regel im vorderen Sitzbereich angeordnet ist und diesen gegenüber einem Sitzrahmen in der Höhe verstellt. Zur Verwendung des Beschlages für eine Sitzneigungsverstellung ist nach einer besonderes vorteilhaften Weiterbildung der Erfindung vorgesehen, dass an dem Beschlagunterteil Befestigungsmittel, insbesondere Gewindebolzen zur Befestigung des Beschlagunterteils an einem Sitzrahmen, insbesondere an einer Innenseite eines Sitzrahmens und an dem Beschlagoberteil eine Lasche zur Anordnung eines Übertragungsrohres angeordnet ist.

Gemäß dieser Weiterbildung der Erfindung lässt sich der Beschlag unmittelbar an der Sitzstruktur befestigen. Hierzu dienen die am Beschlagunterteil angeordneten Befestigungsmittel, insbesondere Gewindebolzen, mittels derer sich der Beschlag an dem Sitzrahmen in einfacher Weise, nämlich unter Verwendung geeigneter Muttern festlegen lässt. Zur Übertragung einer Schwenkbewegung des Beschlagoberteils gegenüber dem Beschlagunterteil auf den Fahrzeugsitz dient ein Übertragungsrohr, welches zum einen an geeigneter Stelle mit dem Fahrzeugsitz sowie mit seinen beiden Enden an jeweils einem Beschlag angeordnet ist. Die Ausgestaltung einer Lasche ermöglicht eine besonders einfache und kostengünstige Anordnung eines entsprechenden Übertragungsrohres an dem Beschlagoberteil. Der Antrieb des Beschlages kann dabei sowohl über ein Handrad als auch über einen motorischen Antrieb erfolgen, wobei diese mit der Antriebswelle in geeigneter Weise verbunden sind.

Nachdem insbesondere im Falle der Verwendung des Beschlages für eine Sitzneigungsverstellung in der Regel ein nur geringer Verstellweg des Beschlagoberteils mit dem Beschlagunterteil erforderlich ist, ist nach einer besonders vorteilhaften Ausgestaltung der Erfindung vorgesehen, dass das Beschlagunterteil einen Vorsprung aufweist, der sich radial in eine Ausnehmung am Beschlagoberteil erstreckt. Durch diese Ausgestaltung der Erfindung kann auf alternative Mittel zur Begrenzung der Bewegung von Beschlagoberteil gegenüber Beschlagunterteil, insbesondere im Falle der Verwendung als Neigungsverstellung, verzichtet werden. Der Bewegungsbereich des Beschlagoberteils gegenüber dem Beschlagunterteil wird dabei über den Bewegungsbereich bestimmt, innerhalb derer sich der Vorsprung in der Ausnehmung bewegen kann.

Ein Ausführungsbeispiel der Erfindung wird nachstehend mit Bezug auf die Zeichnungen näher erläutert. In den Zeichnungen zeigen:
- Fig. 1: eine erste Explosionsdarstellung eines Beschlages mit drei Planetenrädern;

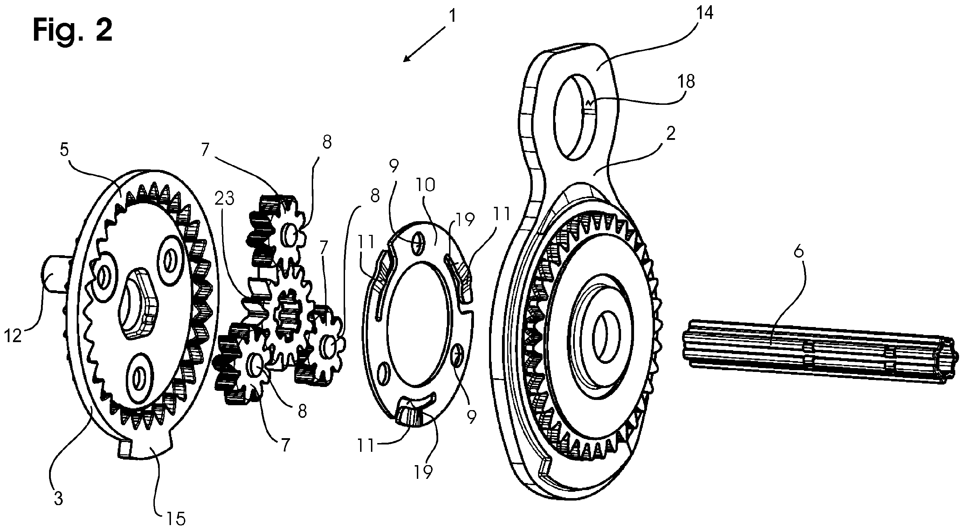

- Fig. 2: eine weitere Explosionsdarstellung des Beschlages von Fig. 1;

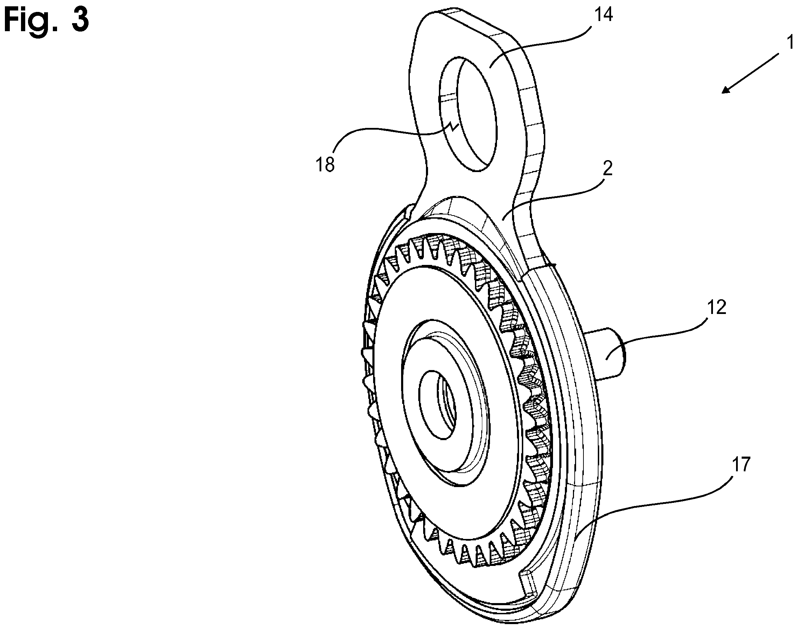

- Fig. 3: eine perspektivische Darstellung des Beschlages von Fig. 1;

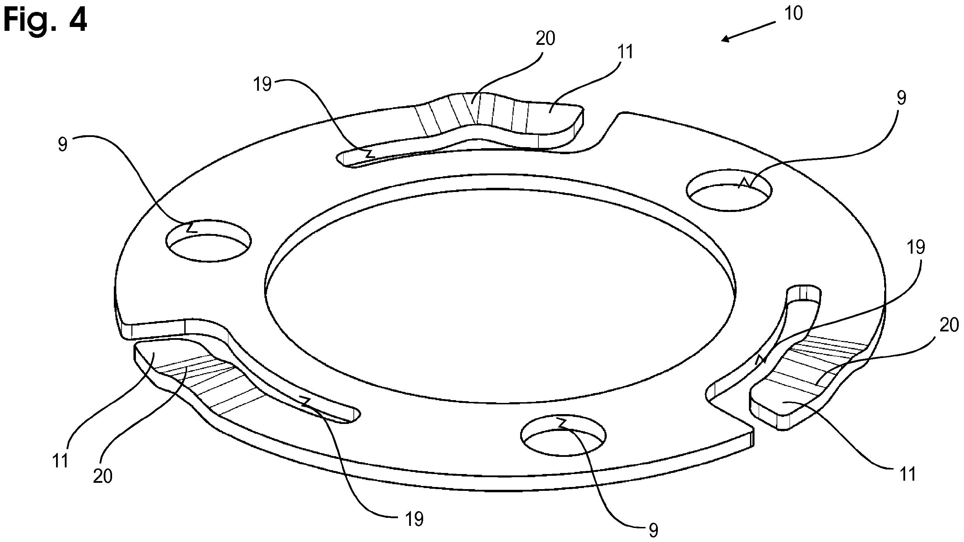

- Fig. 4: eine perspektivische Darstellung einer Lagerscheibe mit einstückig ausgebildeten Federelementen und
- Fig. 5: eine perspektivische Darstellung des Beschlages von Fig. 1 als Sitzneigungsversteller.

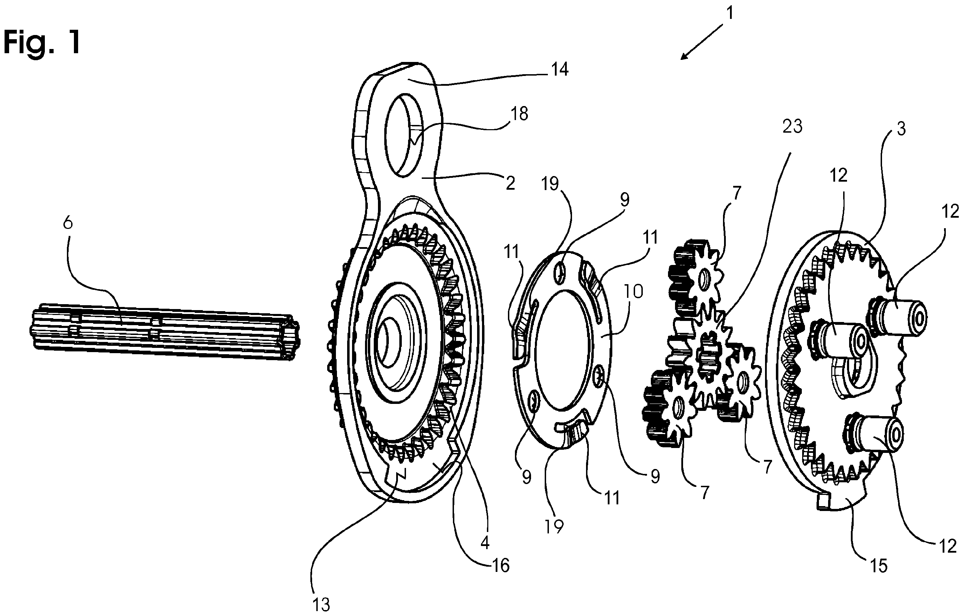

Der in Fig. 1 in einer Explosionsdarstellung wiedergegebene Beschlag 1 weist ein Beschlagoberteil 2 mit einer ersten Innenverzahnung 4 sowie ein Beschlagunterteil 3 mit einer zweiten Innenverzahnung 5 auf. Die Innenverzahnungen 4, 5 weisen eine unterschiedliche Zähnezahl auf, wobei in dem dargestellten Ausführungsbeispiel das Beschlagoberteil 2 eine Zähnezahl von 34 Zähnen aufweist, und das Beschlagunterteil 3 eine Zähnezahl von 31 Zähnen. Die Kopfkreise und Fußkreise der beiden Innenverzahnungen 4, 5 sind dabei konzentrisch, so dass in der Zusammenbaulage drei Planetenräder 7 verstellbar in Eingriff mit beiden Innenverzahnungen 4, 5 sind.

Die Planetenräder 7 sind hierzu mit Lageransätzen 8 drehbar in Lageröffnungen 9 einer Lagerscheibe 10 angeordnet, wodurch die Planetenräder 7 in ihrer Position relativ zueinander drehbar festgelegt sind. Die Lagerscheibe 10, die vorzugsweise aus einem Federstahl hergestellt ist, weist darüber hinaus einstückig ausgebildete Federelemente 11 auf. Die Federelemente 11 sind dabei durch Laschen gebildet, die durch Ausnehmungen 19 partiell von der Lagerscheibe 10 abgetrennt sind. Die Laschen weisen dabei Erhebungen 20 auf, welche in der Zusammenbaulage des Beschlages 1 eine elastische Verlagerung der Laschen gegenüber der Lagerscheibe 10 bewirken. Aufgrund der Anlage der Lagerscheibe 10 einerseits an den Planetenrädern 7 und andererseits an einer Anlagefläche 13 am Beschlagoberteil 2 werden diese in Richtung auf das Beschlagunterteil 3 vorgespannt.

Zum Antrieb des Beschlages 1 dient eine verzahnte Antriebswelle 6. Diese ist mit einem Sonnenrad 23 in Eingriff befindlich, welches seinerseits mit den Planetenrädern 7 in Eingriff befindlich ist. Eine Verstellung des Beschlagoberteils 2 gegenüber dem Beschlagunterteil 3 wird durch eine Verdrehung der Antriebswelle 6 erreicht, welche über das Sonnenrad 23 die Planetenräder 7 in den Lageröffnungen 9 verdreht.

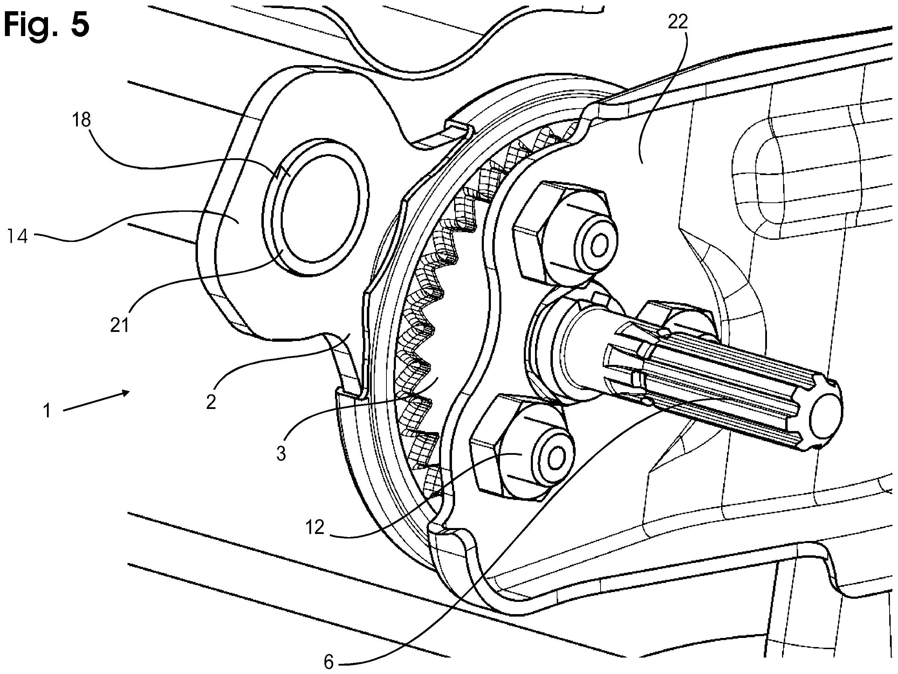

Zur Verwendung des Beschlags 1 als Neigungsversteller wird dieser, wie in Fig. 5 dargestellt, über außenseitig an dem Beschlagunterteil 3 angeordnete Gewindebolzen 12 mit einer Innenseite eines Sitzrahmens 22 verschraubt. Das über einen Haltering 17 in seiner Position zusätzlich an dem Beschlagunterteil 3 angeordnete Beschlagoberteil 2 weist eine Lasche 14 auf, welche zur Aufnahme eines Übertragungsrohres 21 eine Öffnung 18 besitzt.

Zur Verstellung des Beschlagoberteils 2 gegenüber dem am Sitzrahmen 22 angeordneten Beschlagunterteil 3 erstreckt sich die Antriebswelle 6 durch eine Öffnung im Sitzrahmen 22. Die Verdrehung der Antriebswelle 6 über ein auf der Antriebswelle 6 anordbares, hier nicht dargestelltes Handrad, bewirkt eine Verschwenkung des Beschlagoberteils 2 gegenüber dem Beschlagunterteil 3. Die Schwenkwinkelbegrenzung erfolgt dabei über einen Vorsprung 15, an dem Beschlagunterteil 3, welcher in einer Ausnehmung 16 an dem Beschlagoberteil 2 angeordnet ist.

## Patentansprüche

1. Beschlag für eine Verstellvorrichtung, insbesondere Neigungsverstellung eines Kraftfahrzeugsitzes, mit
- einem eine erste Innenverzahnung aufweisenden Beschlagoberteil,
- einem relativ zum Beschlagoberteil um eine Beschlagachse verstellbaren Beschlagunterteil mit einer koaxial zur ersten Innenverzahnung angeordneten zweiten Innenverzahnung,
- mindestens zwei, vorzugsweise drei drehbar angeordnete Planetenräder (7), die mit der ersten und zweiten Innenverzahnung in Eingriff befindlich sind
- einer Antriebswelle (6), die mit einem Ritzel (23) mit den mindestens zwei Planetenrädern in Wirkverbindung befindlich ist und
- mindestens zwei, vorzugsweise drei, die Planetenräder (7) in Rotationsachsenrichtung auf das Beschlagunterteil (3) oder Beschlagoberteil (2) vorspannende Federelemente (11), welche verteilt an einer die Planetenräder (7) radial lagernden Lagerscheibe (10) ausgebildet sind,
**dadurch gekennzeichnet, dass** die Federelemente (11) durch über eine Ausnehmung (19) partiell von der Lagerscheibe (10) abgetrennte Bereiche gebildet sind, die von einer Ebene der Lagerscheibe (10) vorstehende Erhebungen (20) aufweisen.

2. Beschlag nach Anspruch 1, **dadurch gekennzeichnet, dass** die Lagerscheibe (10) mindestens im Kontaktbereich mit den Planentenrädern (7) eine Gleitbeschichtung aufweist.

3. Beschlag nach einem der vorhergehenden Ansprüche, **dadurch gekennzeichnet, dass** an dem Beschlagunterteil (3) Befestigungsmittel, insbesondere Gewindebolzen (12) zur Befestigung des Beschlagunterteils (3) an einem Sitzrahmen (22) und an dem Beschlagoberteil (2) eine Lasche (14) zur Anordnung eines Übertragungsrohres (21) angeordnet ist.

4. Beschlag nach einem der vorhergehenden Ansprüche, **dadurch gekennzeichnet, dass** das Beschlagunterteil (3) einen Vorsprung (15) aufweist, der sich radial in eine Ausnehmung (16) am Beschlagoberteil (2) erstreckt.

## Claims

1. Fitting for an adjusting device, in particular inclination adjustment of a motor vehicle seat, with
- a fitting upper part having a first internal toothing,
- a fitting lower part which is adjustable relative to the fitting upper part about a fitting axis and has a second internal toothing arranged coaxially with respect to the first internal toothing,
- at least two, preferably three rotatably arranged planet wheels (7) which are in engagement with the first and second internal toothing,
- a driveshaft (6) which is operatively connected to a pinion (23) having the at least two planet wheels, and
- at least two, preferably three, spring elements (11) which pretension the planet wheels (7) in the direction of the axis of rotation onto the fitting lower part (3) or fitting upper part (2) and are formed in a manner distributed on a bearing disc (10) supporting the planet wheels (7) radially,
**characterized in that** the spring elements (11) are formed by regions which are partially separated from the bearing disc (10) by a recess (19) and have elevations (20) protruding from a plane of the bearing disc (10).

2. Fitting according to Claim 1, **characterized in that** the bearing disc (10) has a sliding coating at least in the contact region with the planet wheels (7).

3. Fitting according to either of the preceding claims, **characterized in that** fastening means, in particular threaded bolts (12) for fastening the fitting lower part (3) to a seat frame (22), is arranged on the fitting lower part (3), and a tab (14) for the arrangement of a transmission tube (21) is arranged on the fitting upper part (2).

4. Fitting according to one of the preceding claims, **characterized in that** the fitting lower part (3) has a projection (15) which extends radially into a recess (16) on the fitting upper part (2).

## Revendications

1. Ferrure pour un dispositif de réglage, en particulier un réglage d'inclinaison d'un siège de véhicule automobile, comprenant
- une partie supérieure de ferrure présentant une première denture intérieure,
- une partie inférieure de ferrure déplaçable par rapport à la partie supérieure de ferrure autour d'un axe de ferrure, comprenant une deuxième denture intérieure disposée coaxialement par rapport à la première denture intérieure,
- au moins deux, de préférence trois roues planétaires (7) disposées de manière rotative, qui sont en prise avec la première et la deuxième denture intérieure,
- un arbre d'entraînement (6) qui est en liaison fonctionnelle par un pignon (23) avec les au moins deux roues planétaire et
- au moins deux, de préférence trois éléments de ressort (11) sollicitant les roues planétaires (7) dans la direction de l'axe de rotation sur la partie inférieure de ferrure (3) ou sur la partie supérieure de serrure (2), lesquels sont réalisés de manière répartie sur un disque de palier (10) supportant radialement les roues planétaires (7),
**caractérisée en ce que**
les éléments de ressort (11) sont formés par des régions séparées partiellement du disque de palier (10) par le biais d'un évidement (19), lesquelles présentent des rehaussements (20) faisant saillie depuis un plan du disque de palier (10).

2. Ferrure selon la revendication 1, **caractérisée en ce que** le disque de palier (10) présente un revêtement de glissement au moins dans la région de contact avec les roues planétaires (7).

3. Ferrure selon l'une quelconque des revendications précédentes, **caractérisée en ce que** des moyens de fixation, en particulier des boulons filetés (12) pour la fixation de la partie inférieure de ferrure (3) à un cadre de siège (22) est disposé sur la partie inférieure de ferrure (3) et une patte (14) pour le positionnement d'un tube de transfert (21) est disposé au niveau de la partie supérieure de ferrure (2).

4. Ferrure selon l'une quelconque des revendications précédentes, **caractérisée en ce que** la partie inférieure de ferrure (3) présente une saillie (15) qui s'étend radialement dans un évidement (16) sur la partie supérieure de serrure (2).
